# DEMANDE DE BREVET EUROPEEN

(11) **EP 1 753 075 A1**
(43) Date de publication de la demande: **14.02.2007**
(21) Numéro de dépôt: 06291273.8
(22) Date de dépôt: 07.08.2006
(51) Int. Cl.: H01Q 1/24, H01Q 1/12, E04H 12/34, F16L 3/00, E05D 7/10, E05D 11/10

(54) **Mât encliquetable support pour antennes de radio communication**

(30) Priorité: 08.08.2005 FR 0508412
(71) Demandeur: Pillosio, Luigi, 94120 Fontenay Sous Bois (FR)
(72) Inventeur: Pillosio, Luigi, 94120 Fontenay Sous Bois (FR)

(57) **Abrégé**

Dispositif de fixation depuis le sol d'au moins un mât secondaire support d'antenne de radio communication sur un mât porteur vertical

Dispositif de fixation d'au moins un mât secondaire (11) porte antenne (A) sur un mât porteur vertical (1), qui comporte un moyen assurant l'accrochage (4) des mâts secondaires (11) et un moyen assurant le blocage (5) en rotation et verticalement des mâts secondaires (11) ces moyens (4,5) étant disposés de manière que les mâts secondaires (11) soient parallèles au mat porteur vertical (1) et rayonnants. Les moyens d'accrochage (4) et le moyen de blocage (5) par un dispositif de forme (21,42) permettant le montage par encliquetage du mât secondaire, le réglage de l'azimut par rotation et le blocage de l'ensemble depuis le sol.

## Description

L'invention a pour objet un dispositif de mât multiple pour des antennes de radiocommunication.

Le territoire national est couvert de sites de réception et d'émission dans le cadre de maillage de radiocommunication. Si ce maillage est relativement simple en dehors des agglomérations, il n'en est pas de même à l'intérieur des villes.

En effet, les émissions sont alors coupées par la présence d' immeubles créant des écrans pour la transmission des signaux.

Il est donc nécessaire d'augmenter le nombre des sites de réception et d'émission des ondes radio.

Normalement, une antenne doit être placée aussi haut que possible, c'est pourquoi, les sites privilégiés sont situés sur les terrasses des immeubles de grande hauteur, les châteaux d'eau, les silos...

Les sites comprennent d'une part les antennes panneaux dont les dimensions peuvent varier d'une hauteur de 0.60 à 2.70 mètres et une section de 0.40 x 0.15 mètre d'épaisseur pour la réception et l'émission des signaux, et d'autre part des baies électroniques connectées au réseau filaire, qui gèrent les signaux.

Les antennes sont fixées sur des mâts métalliques posés sur les terrasses ou bien en applique sur les murs de façade des derniers étages ou sur les murs des édicules techniques des immeubles, châteaux d'eau, silos, ...

Chaque site d'émission/réception est composé au minimum par trois antennes GSM. Chaque antenne GSM émet/reçoit les signaux sur un secteur de 120°.

Aujourd'hui dans le cadre du déploiement du nouveau réseau UMTS, les sites d'émission/réception devront être densifiés.

Actuellement les antennes sont fixées directement sur les mâts par l'intermédiaire de deux organes d'attache tels que des brides situées au niveau bas et au niveau haut de l'antenne.

Chaque antenne doit pouvoir être réglée horizontalement (azimut), et verticalement (tilt) par une inclinaison par rapport à la verticale vers la zone où l'on désire transmettre les signaux.

Généralement les antennes sont posées verticalement. Sur les nouvelles génération d'antennes le tilt est réglé par un dispositif électrique interne à l'antenne. Seul le réglage en azimut est réalisé par une intervention extérieure manuelle.

Sur les antennes posées sur les mâts classiques des installations de première génération de déploiement du réseau de téléphonie mobile, pour régler l'azimut d'une antenne le technicien doit monter en tête de mât pour agir sur les brides sommitales de liaison de l'antenne avec le mât.

Aujourd'hui un premier procédé de mât rabattable permet le montage de l'antenne depuis le plancher d'assise du mât, par exemple selon les brevets demandes de Bouygues télécom FR 00 05242, Pillosio FR 02 12083, ou bien LG Investissement FR 00 08560.

Un second procédé composé d'un mât principal porteur et de plusieurs mâts secondaires rayonnants permet de monter plusieurs antennes sur un ensemble: brevets et demandes de brevets Bouygues télécom FR 00 13217, Télécommunications Internationnal FR 2 733 633 ; HuhleStahl DE 90 16 908 U, AT & Wireless Service WO 96 11352, Pillosio F 01 09999.

Dans ce second type de mâts le montage et la maintenance des antennes sont réalisés en hauteur sur échelle par des opérateurs équipés de harnais de sécurité.

Le premier procédé de mât rabattable ne permet pas, ou que très difficilement, le montage et le réglage en azimut de trois antennes ou plus sur un même mât.

Le second procédé composé d'un mât porteur principal avec des mâts secondaires rayonnants permet le montage de plusieurs antennes mais conduit à maintenir et pérenniser la création de postes de travail en hauteur.

L'invention a pour but de créer un mât porteur vertical fixe ou bien rotatif, permettant de supporter au minimum une antenne, dont la mise en oeuvre, le réglage en azimut et la maintenance sont effectués depuis le plancher par une équipe de techniciens. Ainsi, l'emploi d'échelle, escabeau, emmarchement... n'est plus nécessaire pour la mise en oeuvre, le réglage et la maintenance du matériel.

En outre, ceci permet de supprimer les risques du travail en hauteur par des opérateurs spécialisés, équipés d'un système de sécurité, constitué par un harnais solidaire d'un mousqueton fixé sur un coulisseau anti-chute intégré à l'échelle, fixée sur le mât porteur principal.

La mise en oeuvre des antennes depuis le plancher a aussi pour corollaire de supprimer l'échelle fixée au mât, nécessaire à la maintenance des antennes, ainsi que les bracons situés de part et d'autre du mât et qui assurent sa stabilité latérale sous l'action des efforts produits par la chute d'un homme.

On connaît déjà, par le document FR-A-2 818 810, un dispositif de fixation d'une antenne sur un mât porteur, permettant le réglage en azimut et en inclinaison, à partir du sol. Dans ce cas l'antenne est fixée sur un support allongé comportant, à sa partie supérieure, un crochet qui s'engage sur une couronne circulaire fixée en tête du mât. Il est ainsi possible, après accrochage de l'antenne, de faire glisser le crochet le long de la couronne, de faire tourner l'antenne autour du mât et, ainsi, de régler son orientation en azimut à partir du sol.

Après ce réglage en azimut, l'antenne est fixée le long du mât par un organe de blocage monté en partie basse du mât et permettant le réglage d'inclinaison. Ce réglage dit « tilt » peut, aussi, être effectué maintenant par des moyens électroniques intégrés à l'antenne avec commande en partie basse de celle-ci.

Un tel dispositif ne permet, cependant, pas d'accrocher sur le mât plusieurs antennes puisque le réglage en azimut de l'antenne dépend de sa position le long de la couronne.

L'invention a pour objet de résoudre l'ensemble de ces problèmes grâce à un dispositif permettant, d'une part, de fixer éventuellement plusieurs antennes sur un même mât porteur et, d'autre part, de régler séparément chaque antenne en azimut à partir du sol.

L'invention concerne donc, d'une façon générale, un dispositif de fixation d'au moins une antenne sur un mât porteur à axe vertical, fixé à sa base sur une plate forme, comportant, en partie haute du mât porteur, des moyens d'accrochage d'un organe supérieur d'attache de l'antenne et, en partie basse, des moyens de blocage le long du mât porteur d'un organe inférieur d'attache de l'antenne le long du mât à un niveau déterminé au dessus de la plate forme.

Conformément à l'invention, les moyens d'accrochage sur le mât et l'organe supérieur d'attache de l'antenne comportent, l'un un élément mâle et l'autre un élément femelle qui s'engagent l'un dans l'autre par coulissement suivant un axe sensiblement vertical jusqu'à une position d'arrêt de l'antenne à un niveau souhaité au dessus de la plate forme, avec possibilité de rotation autour dudit axe pour le réglage en azimut de l'antenne avant blocage le long du mât.

Dans un premier mode de réalisation, l'organe supérieur d'attache de l'antenne comporte une pièce d'appui élargie qui vient se placer au dessus d'un logement ménagé sur une collerette fixée en partie haute du mât et prend appui, par coulissement axial vers le bas, sur ladite collerette dans la position d'arrêt de l'antenne au niveau souhaité.

De façon particulièrement avantageuse, l'organe supérieur d'attache de l'antenne forme au moins un bout d'arbre sur lequel est ménagé la partie d'appui élargie et que la collerette est munie d'une fente de largeur un peu supérieure à celle du bout d'arbre pour la mise en place de la partie d'appui au dessus du logement.

Selon une variante, la pièce d'appui comporte deux parties élargies qui s'étendent en saillie de part et d'autre d'un arbre d'attache de l'antenne et que la collerette comporte deux faces d'appui en forme de secteurs diamétralement opposés, entre lesquelles sont ménagés deux évidements pour l'enfilement vers le haut de l'arbre d'attache en faisant passer les parties élargies dans les évidements, lesdites parties élargies revenant se poser sur les deux faces d'appui après rotation d'un quart de tour de l'arbre avec l'antenne pour l'arrêt de celle-ci au niveau souhaité.

Dans un autre mode de réalisation, les deux organes d'attache, respectivement supérieur et inférieur de l'antenne comportent chacun un pivot monté à l'extrémité d'un bras transversal et s'étendant vers le bas, lesdits pivots étant alignés et s'engageant respectivement dans deux orifices alignés ménagés respectivement sur deux plateaux supports écartés, fixés, l'un en partie haute et l'autre en partie basse du mât, lesdits orifices alignés définissant un axe de pivotement de l'antenne pour le réglage en azimut de celle-ci.

Dans encore un autre mode de réalisation, l'organe d'attache supérieur de l'antenne comporte une première tige s'étendant vers le haut et s'engageant, de bas en haut, dans un logement ménagé sur un plateau fixé en partie haute du mât et que l'organe d'attache inférieur comporte un orifice dans lequel s'engage, de bas en haut une seconde tige montée sur un plateau inférieur fixé en partie basse du mât et déplaçable verticalement pour le soulèvement de l'antenne après engagement de la première tige jusqu'à venir en butée sur le fond du logement dans une position d'arrêt de l'antenne au niveau souhaité.

De préférence, les deux organes d'attache de l'antenne sont ménagés sur deux partie écartées d'un mât secondaire sur lequel est fixé l'antenne. Mais il peuvent aussi être fixés directement sur deux zones écartées l'une de l'autre de l'antenne.

Un avantage essentiel de l'invention réside dans le fait qu'elle permet la fixation de plusieurs antennes sur un même mât porteur et leur réglage individuel en azimut à partir de la plate forme.

En effet, le mât porteur peut être équipé de plusieurs moyens d'accrochage et de plusieurs moyens de blocage disposés deux à deux dans des plans rayonnants autour du mât, chaque antenne pouvant être réglée en azimut par rotation autour d'un axe vertical avant blocage le long du mât.

Le dispositif de fixation conçu conformément à l'invention présente un certain nombre d'avantages.

Il permet la mise en oeuvre et le réglage rapide en azimut des antennes de radio communication depuis le sol, sans utilisation d'aides par échelle, escabeau... ce qui réduit le temps d'intervention des opérateurs sur les toitures, et conséquence plus importante, il supprime les travaux en hauteur sur les mâts, permettant ainsi de réduire les risques d'accidents du travail.

La suppression des bracons en tête de mât et de l'échelle associée au mât, minimise les coûts des investissements et permet une meilleure intégration paysagère dans l'environnement.

En outre on notera que les solutions proposées permettant la mise en place des antennes depuis le sol ont l'avantage d'être particulièrement simple et économique par exemple, une lumière débouchant sur le périmètre du moyen assurant l'accrochage.

Mais l'invention couvre aussi d'autres caractéristiques avantageuses qui apparaîtront dans la description détaillée de certains modes de réalisation donnés à titre de simples exemples et représentés sur les dessins annexés.

La figure 1 est une vue schématique en élévation de la mise en place d'un mât secondaire portant une antenne sur un mât porteur vertical.

La figure 2 est une vue en élévation de l'ensemble après accrochage du mât secondaire et de l'antenne.

La figure 3 est une vue d'ensemble, en perspective du mât porteur vertical, mât secondaire et antenne, avec les moyens assurant l'accrochage et le blocage sur le mât porteur.

La figure 4 est une vue de détail du moyen assurant l'accrochage.

La figure 5 est une vue de détail d'un moyen d'encliquetage du mât secondaire sur le mât porteur vertical.

La figure 6 illustre une configuration qui peut être réalisée avec un mât porteur vertical rotatif.

La figure 7 est une vue en élévation d'un second mode de réalisation de l'invention.

La figure 8 est une vue en coupe AA du dispositif de la figure 7.

La figure 9 est une vue de détail d'un troisième mode de réalisation de l'invention.

La figure 10 illustre un quatrième mode de réalisation de l'invention.

La figure 11 est une vue en coupe BB de l'assemblage de la figure 10.

Les figures 12, 13, 14 et 15 représentent d'autres modes de réalisation équivalents dans lesquels le mât secondaire est limité aux deux organes d'attache qui sont fixés directement sur l'antenne.

La figure 16 est une vue partielle, en perspective, d'un autre mode de réalisation du moyen d'accrochage supérieur.

La figure 17 est une vue de détail de l'organe supérieur d'attache du mât secondaire.

La figure 18 montre, en trois étapes, l'utilisation d'un moyen de guidage provisoire.

La figure 19 est une vue de dessus du moyen de guidage.

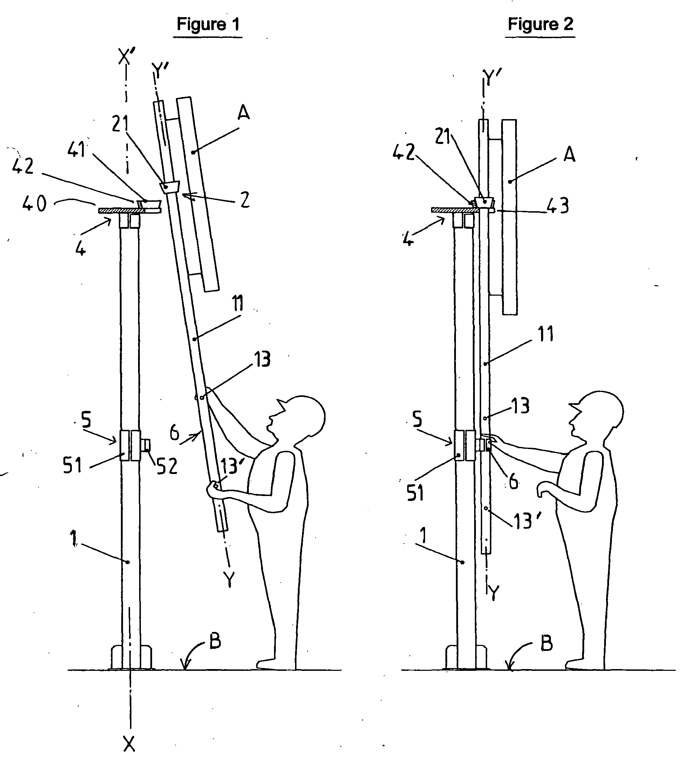

D'une façon générale, l'antenne A est fixée sur un mât porteur vertical 1 par deux organes d'attache écartés l'un de l'autre, respectivement supérieur 2 et Inférieur 6. De préférence,comme le montre les figures 1 à 11, ces organes d'attache sont ménagés sur un mât secondaire 11 qui facilite les manoeuvres d'accrochage et de décrochage à partir d'une plate forme B sur laquelle est fixé le mât porteur 1, par exemple la terrasse d'un immeuble.

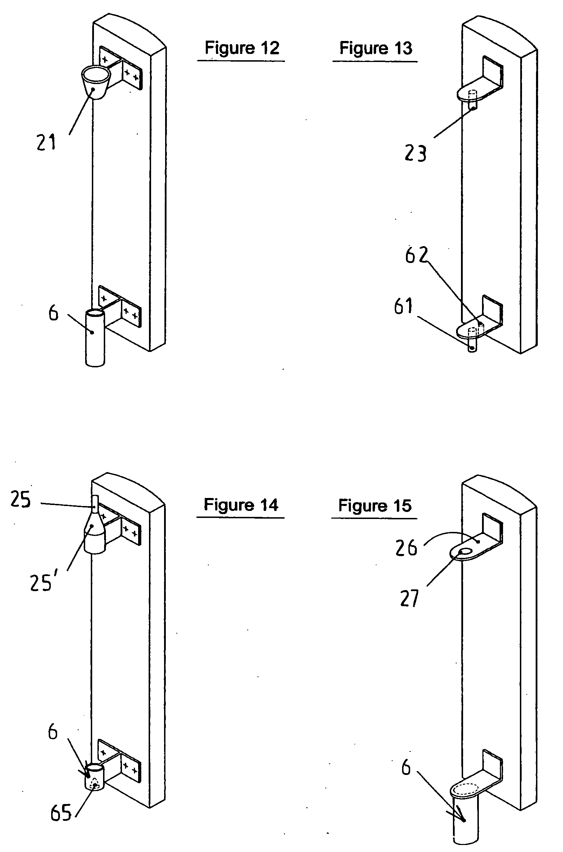

Cependant il est possible également de fixer directement les organes d'attache 2,6 sur l'antenne A. Comme le montrent les figures 12 à 15, toutes les dispositions qui vont maintenant êtres décrites sont applicables également à ces cas où le mât secondaire est limité à ses parties fonctionnelles portant les deux organes d'attache et fait donc partie intégrante de l'antenne.

Les figures 1 et 2 montrent schématiquement les deux étapes de mise en place sur un mât porteur 1, d'une antenne A fixée sur un mât secondaire 11 qui s'étend avantageusement vers le bas pour faciliter la manoeuvre par un opérateur qui peut soulever et orienter l'antenne au moyen de poignées 13,13' montées sur la partie inférieure du mât secondaire 11 et suffisamment écartées pour permettre la manoeuvre du mât 11 portant l'antenne A à sa partie supérieure.

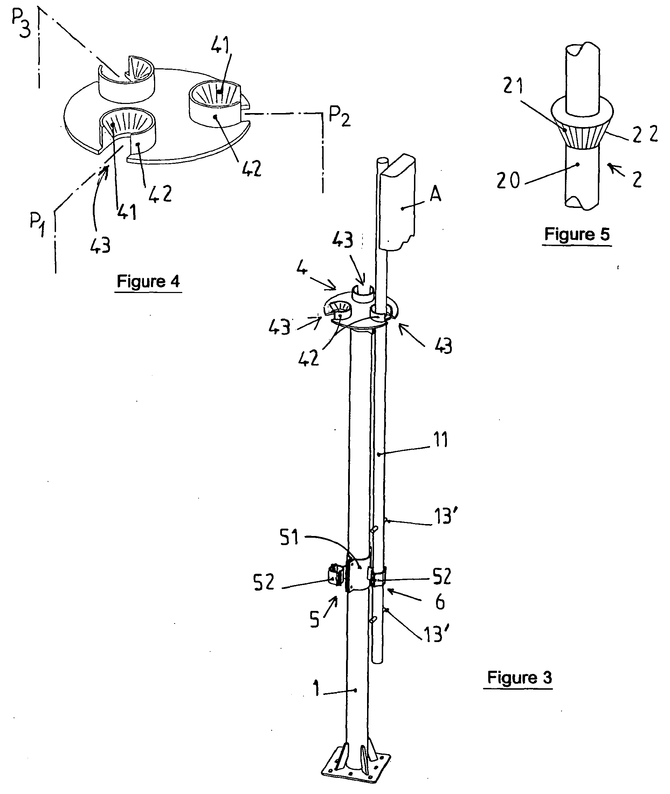

L'organe d'attache supérieur 2 est placé à la partie supérieure du mât secondaire 11, par exemple vers le milieu de la hauteur occupée par l'antenne A. Il est constitué, dans le mode de réalisation des figures 1 à 6, d'une pièce d'appui élargie 21 ayant, de préférence, une face externe 22 de forme tronconique s'ouvrant vers le haut. A la partie supérieure du mât porteur 1 est fixé un moyen d'accrochage 4 qui peut être constitué, comme le montre la figure 4, d'un plateau 40 sur lequel sur lequel sont ménagés plusieurs logements 41 qui peuvent être constitués chacun d'une collerette 42 ayant une face interne ayant un profil creux tronconique, de forme conjuguée à celle de la pièce d'appui 21.

Dans l'exemple représenté, le plateau 40 porte trois logements 41 centrés sur trois plans verticaux P1,P2,P3 régulièrement écartés de 120° (figure 4).

Chaque collerette 42 est munie d'une fente radiale 43 centrée dans le plan correspondant P et de largeur un peu supérieure à celle du bout d'arbre 20 sur lequel est montée la pièce d'appui tronconique 21 et qui, dans l'exemple représenté, constitue une partie du mât secondaire 11 (figure 5).

Pour la mise en place sur le mât porteur 1 d'une antenne A fixée sur un mât secondaire 11, l'opérateur soulève celui-ci au moyen des poignées écartées 13,13' et approche sa partie supérieure du plateau 40 pour engager dans la fente 43 d'une collerette 42 le bout d'arbre 20 portant la pièce d'appui 21 qui se trouve ainsi au dessus du logement 41 (figure 1).

L'opérateur ramène alors le mât secondaire 11 le long du mât porteur 1 en laissant redescendre la pièce élargie 21 qui vient prendre appui sur la collerette 42 constituant, ainsi, un moyen d'arrêt du mât secondaire 11 au niveau souhaité pour l'antenne A.

Le mât secondaire 11 accroché par la pièce 21 au plateau supérieur 40 est ainsi suspendu verticalement le long du mât porteur 1 et est bloqué dans cette position par un moyen de blocage inférieur 5 placé en partie basse du mât porteur 1 et comportant deux demi brides 51 serrées au niveau voulu sur le mât porteur 1 et deux demi brides 52 qui se serrent sur une partie inférieure 6 su mât secondaire 11 constituant l'organe d'attache inférieur de l'antenne (figure 3).

On a ainsi réalisé une sorte d'encliquetage de l'antenne A qui est accrochée au mât porteur 1 par son organe d'attache supérieur 2 en conservant une possibilité de rotation autour de l'axe yy' du mât secondaire 11 pour le réglage en azimut de l'antenne A avant blocage de l'ensemble dans la position angulaire choisie.

D'autre part, il est possible de placer sur le plateau 40 au moins trois antennes centrées dans des plans rayonnants P1,P2,P3 et pouvant être encliquetées et orientées individuellement à partir de la plate forme B.

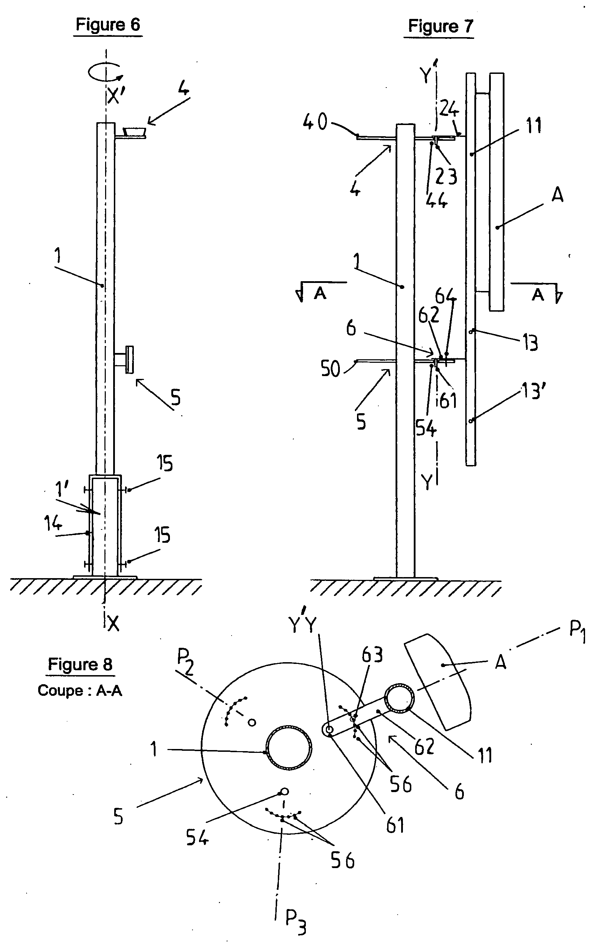

La figure 6 montre une variante avec un mât orientable dont la partie inférieure s'emboîte dans une embase femelle 14 permettant la rotation du mât 1 et son blocage par des moyens de serrage 15.

Cette fonction est très utile lorsque l'opérateur n'a pas accès à l'antenne depuis son poste de travail, par exemple: mât positionné sur la rive d'une toiture, la fonction rotation permet de ramener l'antenne située au dessus du vide sur la toiture et ainsi travailler en toute sécurité; mât situé dans une fausse cheminée, la rotation permet de ramener l'antenne au droit de la porte d'accès...

La figure 7 illustre un second mode de réalisation pour permettre l'accrochage depuis le sol d'au moins un mât secondaire 11 support d'antenne A sur un mât porteur vertical.

Dans ce cas, les organes d'attache, respectivement supérieur 2 et inférieur 6 comportent chacun un pivot 23,61 monté à l'extrémité d'un bras 24,62 fixé transversalement sur le mât secondaire 11. Ces pivots s'étendent vers le bas et sont alignés de façon à pouvoir s'engager, après soulèvement de l'antenne; dans deux orifices alignés 44,54 ménagés respectivement sur un plateau supérieur 40 et un plateau inférieur 50 fixés, l'un en partie haute et l'autre en partie basse du mât porteur 1. Après engagement des pivots 23,61, les deux bras 24,62 prennent appui respectivement sur les deux plateaux 40,50 qui constituent ainsi des moyens d'accrochage et d'arrêt du mât secondaire 11 avec l'antenne A au niveau voulu. Les deux orifices 44,54 sont alignés suivant un axe vertical y'y autour duquel l'ensemble du mât secondaire 11 et de l'antenne A peut pivoter pour le réglage en azimut après encliquetage des pivots 23,61 dans les orifices 44,54.

Le plateau inférieur 50 porte d'autre part, une série de trous écartés 56 répartis sur un secteur circulaire centré sur l'axe de l'orifice 54 et le bras inférieur 62 est muni d'un trou 63 placé à une distance du pivot 61 égale au rayon dudit secteur de façon à venir en coïncidence, successivement avec l'un des trous 56 de la série, ce qui permet, après réglage en azimut, de bloquer l'antenne à l'orientation voulue en introduisant dans les deux trous alignés 63,56, un boulon 64 serré par un écrou.

Comme précédemment, les plateaux 40,50 comportent chacun plusieurs orifices 44,54 centrés dans des plans rayonnants, par exemple trois plans P1,P2,P3 pour permettre la mise en place de trois antennes réglables individuellement en azimut (figure 8).

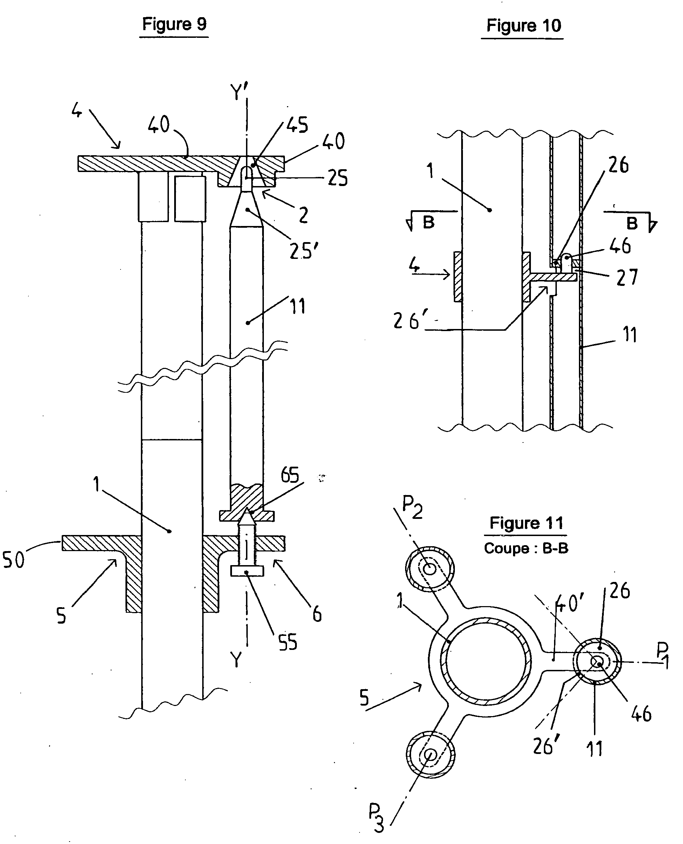

La figure 9, illustre un troisième mode de réalisation qui permet l'accrochage depuis le sol d'au moins un mât secondaire 11 de support d'une antenne A sur un mât porteur vertical 1. Le moyen d'accrochage (4) situé en partie haute comporte un moyen d'encliquetage 2 et un moyen de blocage (5) en partie basse.

Dans ce cas, l'organe supérieur d'attache 2 comporte une tige 25 qui se raccorde à l'extrémité supérieure du mât secondaire 11 par une partie conique 25'.

En soulevant le mât secondaire 11 avec l'antenne, l'opérateur engage cette tige 25, par coulissement axial, dans un logement 45 de forme conjuguée à celle de la partie conique 25' et traversant un plateau 40 fixé à la partie supérieure du mât porteur 1. L'extrémité inférieure du mât secondaire 11 passe au dessus 'un plateau inférieur 50 du mât porteur 1 et est munie d'un trou conique 65 dans lequel s'engage la pointe d'un boulon 55 vissé dans un alésage fileté du plateau 50, l'ensemble constituant l'organe d'attache inférieur 6 du mât secondaire 11 qui peut ainsi pivoter avec l'antenne autour de l'axe vertical passant par la tige supérieure 25 et le trou inférieur 65.

Après réglage en azimut de l'antenne, l'ensemble peut être bloqué dans cette orientation en vissant le boulon 55 pour engager, par coulissement axial, la tige 25 dans un trou de même diamètre s'ouvrant à l'extrémité supérieure du logement 45 dans lequel vient se bloquer la partie conjuguée 25', à l'extrémité du mât 11.

Ainsi, dans tous les cas, on réalise un encliquetage préalable, avant orientation et blocage, de l'extrémité supérieure du mât secondaire 11 par engagement l'un dans l'autre d'un élément mâle et d'un élément femelle, en conservant une possibilité de pivotement pour le réglage en azimut de l'antenne.

L'invention n'est, cependant, pas limitée aux divers modes de réalisation qui viennent d'être décrits, des modes équivalents pouvant être employés en restant dans le cadre de protection défini par les revendications.

Par exemple, dans le cas représenté sur les figures 10 et 11, l'élément du dispositif d'encliquetage est constitué par un pivot 46 s'étendant vers le haut et placé à l'extrémité d'un bras 40 et le mât secondaire 11 est constitué d'un tube muni d'une ouverture 26' placée au dessous d'une cloison 26 dans laquelle est ménagé un trou axial 27.

Par soulèvement du mât secondaire 11 avec l'antenne, l'opérateur engage le bras 40' dans l'ouverture 26' pour placer au dessous de la cloison 26 le pivot 46 qui, en laissant redescendre le mât secondaire 11, s'engage dans le trou 27, le mouvement de descente étant arrêté par l'appui de la cloison 26 sur le bras 40', l'ensemble constituant ainsi un moyen d'arrêt de l'antenne au niveau souhaité, avec possibilité de rotation autour du pivot 46 pour le réglage en azimut. Le mât secondaire 11 peut être bloqué dans l'orientation choisie par exemple par un collier 5 du type représenté sur les figures 1 à 6.

Comme précédemment, le moyen d'accrochage supérieur 4 peut comporter plusieurs bras 40' centrés dans des plans rayonnants P1,P2,P3 pour la mise en place de plusieurs antennes réglables individuellement.

Par ailleurs, comme indiqué plus haut, le mât secondaire 11 est particulièrement avantageux pour l'accrochage et le réglage de l'antenne à partir du sol mais il serait aussi possible de fixer directement sur l'antenne des organes d'attache 2,6 du même type.

Ainsi le mât secondaire limité à ses parties fonctionnelles fait partie intégrante de l'antenne qui vient s'encliqueter directement sur les moyens d'accrochage 4 du mât porteur vertical et est bloquée par le moyen de blocage 5.

Les figures 12,13,14,15 montrent ainsi, des organes d'attache équivalents à ceux qui ont été décrits en référence, respectivement, aux figures 1 et 2, 7, 9, 10, les moyens équivalents portant les mêmes références.

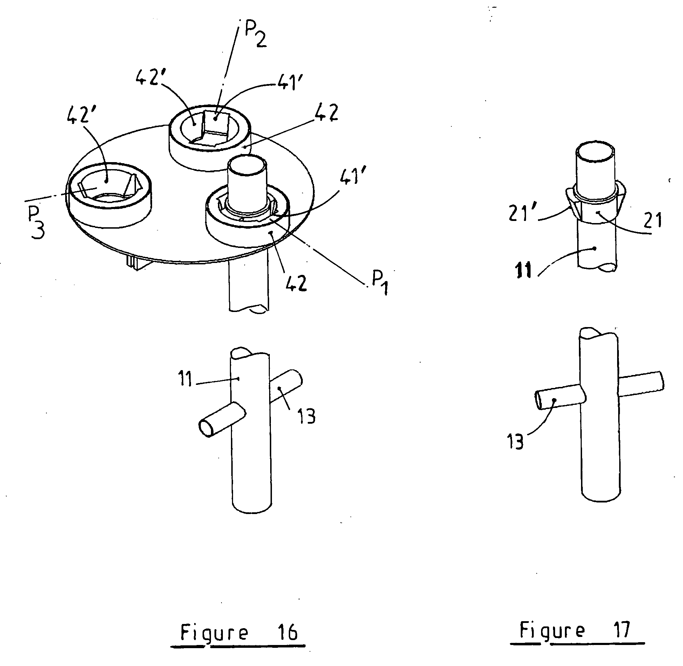

De même, le mode de réalisation des figures 1 à 6 peut faire l'objet d'une variante représentée sur les figures 16 et 17.

Dans ce cas, la pièce d'appui 21 ménagée à la partie supérieure du mât secondaire 11 comporte seulement deux parties élargies 21' à faces tronconiques, qui s'étendent dans des directions diamétralement opposées et la collerette 42 ménagée sur le plateau supérieur 40 comporte seulement deux faces d'appui tronconiques 42' séparées par deux évidements 41' diamétralement opposés et centrés dans un plan radial P.

Pour la mise en place de l'antenne sur le mât porteur 1, l'opérateur introduit par le bas l'extrémité supérieure du mât secondaire 11 dans l'orifice central de la collerette 42, en faisant passer les parties élargies 21' dans les évidements 41' pour placer la pièce d'appui 21 au dessus de la collerette.

En faisant tourner le mât secondaire 11 autour de son axe, les parties élargies 21' se placent au dessus des faces d'appui 42' de la collerette 42 et viennent reposer sur celles-ci dans la position d'accrochage de l'antenne au niveau voulu. Cette disposition permet de supprimer la fente 43 en conservant une certaine possibilité de pivotement pour le réglage en azimut.

Tous ces modes de réalisation permettent donc, de fixer plusieurs antennes de manière rayonnantes sur le mât porteur avec la possibilité de les régler individuellement en azimut à partir de la plate forme.

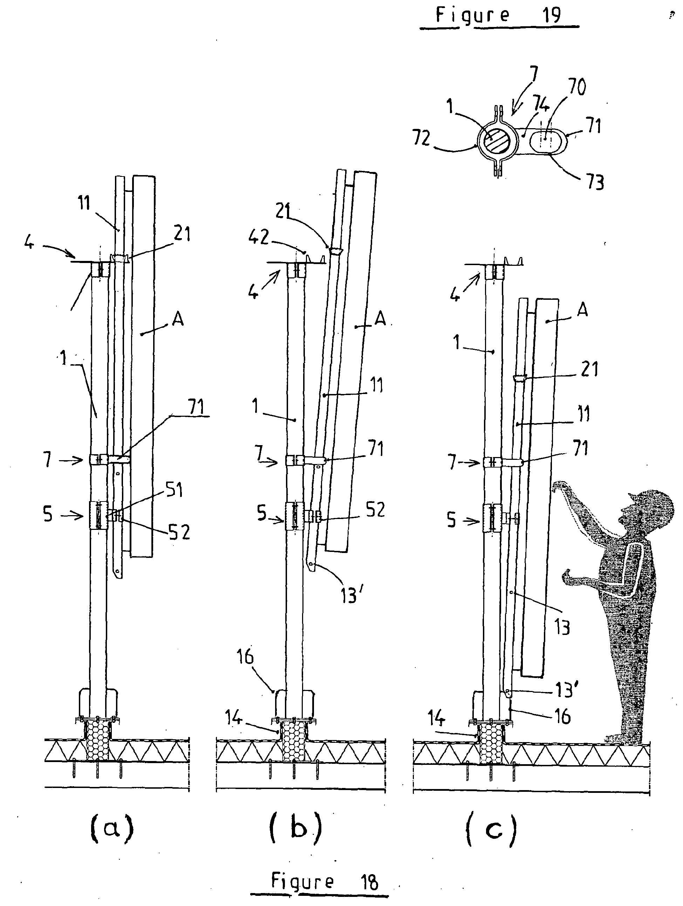

Pour effectuer les manoeuvres en toute sécurité et éviter le basculement de l'antenne au moment de l'accrochage ou du décrochage, il peut être avantageux d'utiliser un moyen de guidage provisoire de la façon représentée sur la figure 18 qui s'applique à un dispositif du type décrit plus haut comportant un moyen d'accrochage 4 et un moyen de blocage 5 montés respectivement en partie haute et en partie basse du mât porteur 1.

Celui-ci est alors équipé d'un moyen de guidage provisoire 7 placé au dessus du moyen de blocage 5 et comportant un collier de guidage 71 fixé sur le mât 1 par un organe de serrage 72, par exemple deux demi brides de la façon représentée, en vue de dessus, sur la figure 19.

Le collier de guidage 71 est monté pivotant autour d'un axe 73 sur un bras 74 et limite un trou oblong 70 de longueur un peu supérieure au diamètre du mât secondaire 11.

La figure 18 montre, en trois étapes, le décrochage d'une antenne.

A l'étape (a), le mât secondaire 11 portant l'antenne A est fixé le long du mât porteur 1 par le moyen d'accrochage 4 et le moyen de blocage 5. Le collier de guidage 71 est alors refermé autour du mât secondaire 11.

A l'étape (b), on a soulevé le mât secondaire 11 de façon à décrocher la pièce d'appui supérieure 21. Le moyen de blocage 5 a été simplement desserré et assure le maintien de l'extrémité inférieure du mât secondaire 11 qui est également maintenu, au dessus, par le moyen de guidage 7, en pouvant, cependant, s'incliner pour dégager la pièce d'appui 21, grâce au degré de liberté donné par la longueur plus grande du trou oblong 70.

L'antenne A ne risque donc pas de basculer sur le coté ou vers l'opérateur, qui peut la faire faire descendre le long du mât 1 en coulissant dans les colliers desserrés du moyen de blocage 5 et du moyen de guidage 7.

Ce mouvement de descente peut se poursuivre dans l'étape (c) jusqu'à ce que l'extrémité inférieure du mât secondaire 11 prenne appui sur le sol. Avantageusement, l'embase 14 su mât porteur 1 peut être équipée d'un support 16 sur lequel vient prendre appui la poignée inférieure 13' de manoeuvre du mât secondaire 11.

Un tel support permet d'éviter une détérioration éventuelle du revêtement d'étanchéité de la plate forme.

Il est alors possible, en toute sécurité, d'ouvrir les colliers 51 et 71 des moyens de blocage 5 et de guidage 7 pour libérer le mât secondaire 11 qui peut alors basculer à l'horizontale en pivotant sur les poignées 13'.

## Revendications

1. Dispositif de fixation d'au moins une antenne (A) sur mât porteur (1) à axe vertical (x'x), fixé à sa base sur une plate forme (B), comportant, en partie haute du mât (1), un moyen (4) d'accrochage d'un organe supérieur (2) d' attache de l'antenne (A) et, en partie basse, un moyen (5) de blocage le long du mât porteur (1), d'un organe inférieur (6) d'attache de l'antenne (A), à un niveau souhaité de celle-ci au dessus de la plate forme (B), **caractérisé par le fait que** le moyen (4) d'accrochage sur le mât porteur (1) et l'organe supérieur d'attache (2) comportent, l'un un élément mâle (21) et l'autre un élément femelle (41) qui s'engagent l'un dans l'autre par coulissement suivant un axe (y'y) sensiblement vertical, jusqu'à une position d'arrêt de l'antenne (A) au niveau souhaité, avec une possibilité de pivotement autour dudit axe (y'y) pour le réglage en azimut de l'antenne (A) avant blocage le long du mât porteur (1).

2. Dispositif de fixation selon la revendication 1, **caractérisé par le fait que** l'organe supérieur d'attache (2) de l'antenne (A) comporte une pièce d'appui élargie (21) susceptible d'être placée au dessus du logement (41) ménagé sur une collerette creuse (42) fixée en partie haute du mât porteur (1) et prenant appui, par coulissement axial vers le bas, sur ladite collerette (42) dans une position d'arrêt de l'antenne (A) au niveau souhaité au dessus de la plate forme (B).

3. Dispositif selon la revendication 2, **caractérisé par le fait que** l'organe supérieur (2) d'attache de l'antenne (A) forme au moins un bout d'arbre (20) sur lequel est ménagé la partie d'appui élargie (21) et que la collerette (42) est munie d'une fente (43) de largeur un peu supérieure à celle du bout d'arbre (20) pour la mise en place de la partie d'appui (21) au dessus du logement (41).

4. Dispositif de fixation selon la revendication 2, **caractérisé par le fait que** la pièce d'appui (21) comporte deux parties élargies (21) s'étendant en saillie de part et d'autre d'au moins un bout d'arbre (20) d'attache sur l'antenne (A) et que la collerette (42) comporte deux faces d'appui (42') en forme de secteurs circulaires diamétralement opposés, entre lesquelles sont ménagés deux évidements (41') pour l'enfilement, par coulissement vers le haut, de l'arbre (20) d'attache de l'antenne (A) en faisant passer les parties élargies (21') dans les évidements (41') de la collerette, lesdites parties élargies (21') se posant ensuite, après rotation d'un quart de tour de l'arbre (20) avec l'antenne (A), sur les deux faces d'appui (41') de la collerette (42) pour l'arrêt de l'antenne (A) au niveau souhaité avec possibilité de pivotement pour réglage en l'azimut.

5. Dispositif de fixation selon l'une des revendications précédentes, **caractérisé par le fait que** les moyens (5) de blocage de l'antenne (A) comportent un collier (51) de serrage amovible placé en partie basse du mât porteur (1) et comportant deux mâchoires entre lesquelles est serré un organe inférieur (6) d'attache de l'antenne (A) dans sa position d'arrêt de celle-ci au niveau souhaité.

6. Dispositif de fixation selon la revendication 1, **caractérisé par le fait que** les deux organes d'attache, respectivement supérieur (4) et inférieur (6) de l'antenne (A) comportent chacun un pivot (23,61) monté à l'extrémité d'un bras transversal (24,62) et s'étendant vers le bas, lesdits pivots (23,61) étant alignés et s'engageant respectivement dans deux orifices alignés (44,54) ménagés respectivement sur deux plateaux de support (40,50) écartés et fixés, l'un (40) en partie haute et l'autre (50) en partie basse du mât porteur (1), lesdits orifices alignés (44,54) définissant un axe sensiblement vertical (y'y) de pivotement de l'antenne (A) pour le réglage en azimut de celle-ci.

7. Dispositif de fixation selon la revendication 6, **caractérisé par le fait que** les deux plateaux de support (40,50) portent chacun une série de trous écartés (46,56) répartis le long d'un secteur circulaire centré sur l'orifice (44,54) de passage du pivot (23,61) correspondant et que chaque bras transversal (24,62) portant un pivot (23,61) est muni d'un trou (25,63) placé à une distance du pivot (23,61) égale au rayon dudit secteur circulaire de façon à venir en coïncidence avec l'un des trous (46,56) de la série pour le blocage de l'antenne (A) après réglage de l'azimut, par introduction d'une cheville dans les trous alignés (25,46)(63,56).

8. Dispositif de fixation selon la revendication 1, **caractérisé par le fait que** l'organe d'attache supérieur (2) de l'antenne (A) comporte une première tige (25) s'étendant vers le haut et s'engageant, de bas en haut, dans un logement (45) ménagé sur un plateau (40) fixé en partie haute du mât (1) et que l'organe d'attache inférieur (6) comporte un orifice (65) dans lequel s'engage, de bas en haut une seconde tige (55) montée sur un plateau inférieur (50) fixé en partie basse du mât (1) et déplaçable verticalement pour le soulèvement de l'antenne (A) après engagement de la première tige (25) jusqu'à venir en butée sur le fond du logement (45) dans une position d'arrêt de l'antenne (A) au niveau souhaité.

9. Dispositif de fixation selon l'une des revendications précédentes, **caractérisé par le fait que** les deux organes d'attache, respectivement supérieur (2) et inférieur (6) de l'antenne (A) sont ménagés sur deux parties écartées d'un mât secondaire (11) sur lequel est fixé l'antenne (A).

10. Dispositif de fixation selon l'une des revendications précédentes, **caractérisé par le fait que** les deux organes d'attache, respectivement supérieur (2) et inférieur (6) de l'antenne (A) sont fixés directement sur deux zones écartées l'une de l'autre de celle-ci.

11. Dispositif de fixation selon l'une des revendications précédentes, de fixation de plusieurs antennes (A) sur un mât porteur (1), **caractérisé par le fait qu'**il comporte plusieurs moyens d'accrochage (4a,4b,...) et plusieurs moyens de blocage (5a,5b,...) disposés deux à deux dans des plans rayonnants (P1,P2,...) autour du mât (1), chaque antenne (A1,A2,...) pouvant être réglée individuellement en azimut par rotation autour d'un axe vertical (1) dudit plan (P1,P2,...) avant blocage de l'antenne (A1,A2,...) le long du mât (1).

12. Dispositif de fixation selon l'une des revendications précédentes, **caractérisé par le fait que** l'antenne (A) est fixée sur un mât secondaire (11) portant les deux organes d'attache, respectivement supérieur (2) et inférieur (6) et que le dispositif comporte un moyen de guidage (7) placé sur le mât (1) à un niveau intermédiaire entre le niveau haut du moyen d'accrochage (4) et le niveau bas du moyen de blocage (5) et comportant un collier amovible (71) qui vient se placer autour du mât secondaire (11) pour le maintien provisoire de ce dernier avec l'antenne (A) après décrochage de l'organe supérieur d'attache (2) avec possibilité de coulissement dudit mât secondaire jusqu'à une position basse d'appui sur la plate forme (B), ledit collier (71) étant alors ouvert pour l'enlèvement du mât secondaire (11) avec l'antenne (A).
